# FASCICULE DE BREVET EUROPEEN

(11) **EP 4 045 413 B1**
(45) Date de publication et mention de la délivrance du brevet: **18.10.2023**
(21) Numéro de dépôt: 21735735.9
(22) Date de dépôt: 02.07.2021
(51) Int. Cl.: B64G 1/64, B64G 1/22

(54) **STRUCTURE PRIMAIRE USINÉE AMORTIE POUR ENGIN SPATIAL, SATELLITE INTÉGRANT CETTE STRUCTURE PRIMAIRE ET PROCÉDÉ DE FABRICATION D'UN TEL SATELLITE**
GEDÄMPFTE, BEARBEITETE PRIMÄRSTRUKTUR FÜR EIN RAUMFAHRZEUG, SATELLIT MIT DIESER PRIMÄRSTRUKTUR UND VERFAHREN ZUR HERSTELLUNG EINES SOLCHEN SATELLITEN
DAMPED MACHINED PRIMARY STRUCTURE FOR A SPACECRAFT, SATELLITE INCORPORATING THIS PRIMARY STRUCTURE AND METHOD FOR MANUFACTURING SUCH A SATELLITE

(30) Priorité: 08.07.2020 FR 2007212
(43) Date de publication de la demande: 24.08.2022
(73) Titulaire: Airbus Defence and Space SAS, 31402 Toulouse Cedex 4 (FR)
(72) Inventeur: GACOIN, Florian, 31402 Toulouse cedex 4 (FR); PIERINET, Jean-Marc, 31402 Toulouse cedex 4 (FR); JOYA, Mireya, 31402 Toulouse cedex 4 (FR); PRADAL, Julien, 31402 Toulouse cedex 4 (FR); LOPEZ-SANCHEZ, Sara, 31402 Toulouse cedex 4 (FR); FABRE, Nicolas, 31402 Toulouse cedex 4 (FR)
(74) Mandataire: Ipside
(86) Numéro de dépôt international: PCT/EP2021/068392
(87) Numéro de publication internationale: WO 2022/008386

(56) Documents cités:
- WO-A1-2017/060392
- WO-A1-2019/223984
- US-A1- 2006 185 277
- US-A1- 2013 099 059
- US-A1- 2018 266 461

## Description

### DOMAINE TECHNIQUE

La présente invention appartient au domaine des engins spatiaux, notamment de leur conception mécanique, et concerne plus particulièrement une structure primaire pour engin spatial et son procédé de fabrication. La structure primaire fabriquée évoluant dans un environnement dynamique vibratoire, telle qu'un satellite artificiel, comprend des panneaux reliés entre eux. Une telle structure primaire est notamment utilisée comme structure mécanique de base d'un satellite scientifique tel qu'un satellite d'observation de le Terre.

### ÉTAT DE LA TECHNIQUE

Pour tout engin destiné à évoluer dans l'espace, comme par exemple un satellite artificiel, la structure primaire est une composante essentielle, dimensionnée et qualifiée pour faire face à différentes contraintes auxquelles l'engin est soumis tout le long de sa durée de vie : sur les bancs d'essais, dans le lanceur et en orbite. Une majeure partie des contraintes mécaniques est due aux vibrations générées par le lanceur, par exemple au décollage ou lors des phases de séparation et de largage. Dans une moindre mesure, les manoeuvres autonomes du satellite en orbite, qui s'accompagnent d'une génération de poussée par les systèmes de propulsion, occasionnent également l'apparition de charges mécaniques au sein du satellite.

En plus de résister elle-même aux vibrations, la structure primaire d'un satellite doit être capable, en absorbant une partie des vibrations, d'atténuer les vibrations transmises aux équipements du satellite, équipements parfois extrêmement sensibles. En outre, la structure primaire doit être également capable de limiter l'amplification de certaines vibrations provoquées par le fonctionnement des équipements de bord eux-mêmes.

Il est donc primordial que la structure primaire du satellite présente une certaine tenue mécanique tout en respectant les exigences en termes de masse et de raideur. Dans cette logique, le matériau de fabrication de la structure primaire joue un rôle important.

Pour les satellites artificiels ou d'autres systèmes spatiaux, la structure primaire est généralement constituée de panneaux composites assemblés par des pièces métalliques de liaison. Ces panneaux présentent par exemple une structure sandwich en nid d'abeilles, qui renforce leur résistance mécanique et garantit une légèreté maximale. Les panneaux composites en nid d'abeilles sont largement répandus en construction aérospatiale et peuvent être utilisés pour résoudre certains problèmes techniques mécaniques ou thermiques, comme expliqué dans les documents FR2971233A1 et JP2003326622A.

Les panneaux composites en nid d'abeilles peuvent être multi matériaux ou mono matériaux et comprennent deux feuilles formant leurs deux faces, jointes entre elles par un noyau en nid d'abeilles. Les panneaux en nid d'abeilles sont en général complexes à fabriquer et onéreux. Leur long cycle de fabrication implique généralement des difficultés d'approvisionnement. En outre leur utilisation peut imposer de débuter les opérations de définition et d'aménagement de la structure primaire du satellite particulièrement tôt dans le plan d'action du programme de fabrication d'un nouveau satellite.

En effet, pour réaliser des murs porte-équipements de satellites avec des panneaux en nid d'abeilles, il est généralement nécessaire de tenir compte des aménagements spécifiques de ces murs et de l'architecture générale du satellite, ce qui induit une définition de la structure primaire par l'assemblage de plusieurs panneaux en nid d'abeilles à l'aide de centaines d'éléments d'interface et de liaison comme des inserts et des équerres.

De plus, le nombre d'industriels fournisseurs de ce type de panneaux complexes reste limité, ce qui peut augmenter encore le facteur de risque lié à l'approvisionnement.

Il est également connu d'utiliser des panneaux métalliques monolithiques en combinaison avec des inserts amortissants comme décrit dans le document WO2017/060392A1. Le document US2013099059 divulgue des inserts amortissants selon l'art antérieur.

### PRÉSENTATION DE L'INVENTION

La présente invention vise à pallier les inconvénients de l'art antérieur ci-dessus exposés, en particulier à diminuer les coûts et les durées de fabrication d'engins spatiaux et de leur structure primaire, pour mieux répondre à une demande grandissante dans un contexte spatial de plus en plus compétitif.

L'invention a ainsi pour objet une structure primaire pour engin spatial comprenant les caractéristiques de la revendication 1.

Selon une autre particularité de l'invention, ledit réseau de nervures comprend une première nervure périphérique délimitant un contour de chaque panneau, certains des panneaux comprenant au moins une ouverture et ledit réseau de nervures comprenant alors au moins une seconde nervure périphérique délimitant ladite ouverture, certains des panneaux comprenant au moins une interface porte instrument et ledit réseau de nervures comprenant alors au moins une troisième nervure périphérique délimitant ladite interface porte instrument, cette interface étant fermée par une desdites plaques amincies présentant une épaisseur déterminée en fonction d'un besoin d'évacuation thermique pour l'instrument.

Selon une autre particularité de l'invention, les plaques amincies aux interfaces porte instruments sont disposées à l'intérieur du caisson par rapport aux nervures tandis que d'autres plaques amincies sont disposées à l'extérieur du caisson par rapport aux nervures qui sont alors disposées saillantes vers l'intérieur du caisson pour permettre d'y fixer des éléments internes à l'engin spatial.

Selon une autre particularité de l'invention, les nervures sont réalisées élargies en des positions déterminées correspondant à des points de fixation percés et filetés.

Selon une autre particularité de l'invention, chaque insert amortissant comporte :
- une pièce externe fixée dans son logement se présentant sous la forme d'un trou de section déterminée, la pièce externe présentant une surface externe de même section que le trou et étant apte à s'insérer dans le logement,
- une pièce interne apte à être fixée à l'anneau d'interface et
- une couche d'élastomère entre la pièce externe et la pièce interne, les pièces externe et interne étant coaxiales et présentant des surfaces en vis-à-vis crantées et décalées longitudinalement l'une par rapport à l'autre, de sorte à définir un volume de forme ondulée recevant la couche d'élastomère.

Un autre objet de l'invention concerne un satellite artificiel comprenant une structure primaire selon l'invention. Typiquement, un tel satellite artificiel présente par exemple une masse comprise entre 100kg et 1000kg.

Un autre objet de l'invention concerne un procédé de fabrication d'un engin spatial comprenant les étapes de la revendication 7.

Selon une autre particularité de l'invention, au moins un des panneaux est usiné de façon à ce que son réseau de nervures comprenne au moins une nervure périphérique délimitant au moins une interface porte instrument, cette interface étant fermée par une desdites plaques amincies présentant une épaisseur déterminée en fonction d'un besoin d'évacuation thermique pour l'instrument. Selon une autre particularité de l'invention, ledit panneau est usiné de façon à ce que les plaques amincies aux interfaces porte instruments soient disposées à l'intérieur du caisson par rapport aux nervures tandis que d'autres plaques amincies sont disposées à l'extérieur du caisson par rapport aux nervures qui sont alors disposées saillantes vers l'intérieur du caisson pour permettre d'y fixer des éléments internes à l'engin spatial.

Selon une autre particularité de l'invention, les panneaux sont usinés en laissant une nervure délimitant la périphérie de chaque panneau.

Selon une autre particularité de l'invention, des panneaux sont usinés en pratiquant au moins une ouverture et en laissant au moins une nervure délimitant la périphérie de ladite ouverture.

Selon une autre particularité de l'invention, les nervures sont réalisées élargies en des positions déterminées correspondant à des points de fixation percés et filetés.

Les panneaux sont usinés dans une plaque de métal, tel que l'aluminium, dont l'épaisseur est supérieure à l'épaisseur maximale des nervures. Avantageusement, la structure primaire selon l'invention, bien qu'utilisant des panneaux usinés monolithiques, permet d'amortir efficacement des vibrations se propageant dans un plan longitudinal des panneaux latéraux, tout en respectant les exigences de raideur et de masse. Les panneaux usinés selon l'invention sont notamment dépourvus de noyau en nid d'abeilles. La présente invention a notamment permis de surmonter un frein technologique concernant un remplacement efficace des panneaux en nid d'abeilles actuels qui préserverait suffisamment les performances mécaniques. Il convient de rappeler que lors d'un lancement, les murs latéraux du satellite sont placés sensiblement parallèlement à l'axe du lanceur et travaillent donc essentiellement en cisaillement en raison des vibrations longitudinales du lanceur. De ce fait, des murs en nid d'abeilles qui comportent en outre plusieurs pièces collées entre elles, amortissent les vibrations et notamment les vibrations longitudinales en raison de leur module en cisaillement relativement faible. Autrement dit, ces panneaux présentent une certaine souplesse en cisaillement qui leur permet d'amortir notamment les vibrations longitudinales. Le remplacement des panneaux en nid d'abeilles était dès lors difficilement concevable en considérant les contraintes de raideur en cisaillement et les contraintes de masse.

Un autre avantage de la présente invention réside dans la facilité d'assemblage des panneaux entre eux ainsi que des panneaux avec d'autres éléments constitutifs de l'engin spatial. En effet, les panneaux selon l'invention peuvent être joints avec un contact direct entre eux, sans nécessiter, par exemple, d'inserts noyés dans le panneau ni d'équerre de liaison. Les panneaux peuvent également être fixés directement à une embase d'un instrument ou à une attache d'un élément constitutif de l'engin spatial. Le lieu de fixation sur le panneau sera par exemple renforcé en laissant un surplus de matière, par exemple sous la forme d'une nervure, pour éventuellement y réaliser un trou fileté.

Un autre avantage de la présente invention est de faciliter l'aménagement des éléments constitutifs de l'engin spatial, les liaisons pouvant par exemple se placer en bord de panneaux, les trous de passage pouvant par exemple se localiser proches des limites géométriques de panneaux et les empreintes pour connections électriques pouvant par exemple être intégrées directement dans les panneaux usinés. La présente invention permet ainsi de répondre aux exigences relatives à la résistance aux vibrations, à la raideur et à la masse tout en facilitant la conception et le montage de l'engin spatial.

Les concepts fondamentaux de l'invention venant d'être exposés dans leur forme la plus élémentaire, d'autres détails et caractéristiques ressortiront plus clairement à la lecture de la description qui suit et en regard des dessins annexés, donnant à titre d'exemple non limitatif de modes de réalisation d'un satellite et de sa structure primaire usinée amortie conforme aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés schématiquement et ne sont pas nécessairement à la même échelle. Sur l'ensemble des figures, les éléments identiques ou équivalents portent la même référence numérique.

Il est ainsi illustré en :
[Fig.1] : une vue en perspective d'un satellite artificiel comportant une structure primaire selon l'invention ;
[Fig.2] : une vue en perspective d'une structure primaire, selon l'invention ;
[Fig.3a] : une vue éclatée selon une première perspective de la structure primaire de la figure 2 ;
[Fig.3b] : une vue éclatée selon une deuxième perspective de la structure primaire de la figure 2 ;
[Fig.4] : une vue en coupe d'un insert amortissant permettant une liaison locale entre un panneau latéral à la base du caisson et un anneau d'interface de la structure primaire selon l'invention ;
[Fig.5] : une vue en perspective d'un insert amortissant selon l'invention ;
[Fig.6] : une coupe de la figure 5 selon un plan longitudinal B - B ;
[Fig.7] : une vue partielle en perspective d'un exemple de structure primaire selon l'invention ;
[Fig.8] : une vue partielle en perspective d'un panneau comprenant une ouverture ;
[Fig.9] : une vue en perspective d'un panneau latéral à la base du caisson ;
[Fig.10] : une vue partielle en perspective d'une jonction entre trois panneaux.

### DESCRIPTION DÉTAILLÉE DE MODES DE RÉALISATION

Dans la présente description, on fait référence à une structure primaire usinée et amortie à sa base pour engin spatial, destinée principalement aux satellites artificiels d'architecture dite en caisson tels que certains satellites d'observation de la Terre. Toutefois le mot caisson ne devrait pas être interprété limitativement, la structure primaire selon l'invention pouvant s'adapter à une grande variété d'engins spatiaux. On entend par « structure primaire » la structure de base pour la constitution d'une plateforme spatiale. Le terme « satellite » désigne un satellite artificiel.

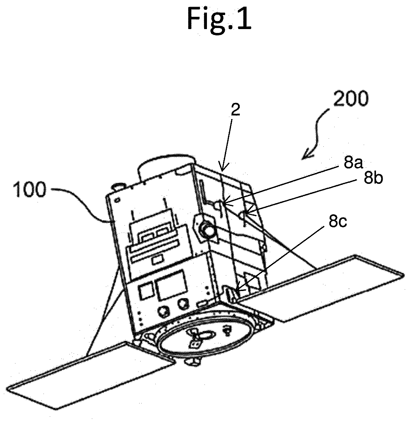

La figure 1 représente un satellite 200 en configuration déployée, opérant en orbite par exemple, dont le corps est principalement constitué d'une structure primaire 100 usinée amortie selon l'invention. La structure primaire 100 est dimensionnée pour répondre à l'environnement dynamique qu'observe les satellites lors de leur lancement mais également en cours d'opération lors des manoeuvres orbitales par exemple. La structure primaire 100 comprend un caisson 2 sur lequel viennent se greffer des éléments constitutifs du satellite 200. Le caisson 2 est ici formé de panneaux usinés et joints directement entre eux. Des points de fixation 8a et 8b pour des câbles de retenue, sont par exemple prévus sur une face extérieure directement sur un panneau. Des points de fixation 8c pour des charnières de générateur solaire sont par exemple prévus sur une face extérieure directement sur un panneau.

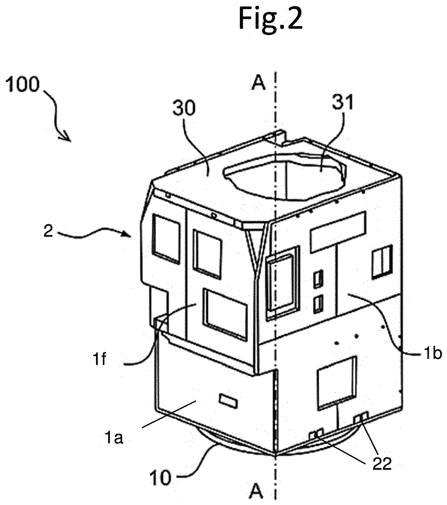

La figure 2 représente de façon isolée la structure primaire 100 présentant un caisson 2 de forme globalement parallélépipédique et comportant un anneau d'interface 10, par lequel le satellite est destiné à être rigidement fixé à une plateforme porte-satellite d'un lanceur. Le caisson 2 pourrait être réalisé, de manière non limitative, selon d'autres formes. Le caisson 2 comprend ici des cloisons composées chacune d'un ou plusieurs panneaux 1a, 1b et 1f. Un panneau 30, à l'opposé de l'anneau d'interface, comprend par exemple une ouverture 31 destinée au passage d'un instrument. Ce panneau 30, par exemple désigné par « panneau terre », ferme une face du caisson pointant vers la Terre lorsque le satellite est opérationnel.

Il est à noter que la fixation rigide entre l'anneau d'interface 10 et le lanceur est temporaire pour être rompue lors du largage du satellite, largage qui s'accompagne d'un niveau intense de vibrations dans le satellite. Les panneaux latéraux 1a et 1b à la base du caisson sont reliés à l'anneau d'interface 10 via des inserts amortissants réalisant ainsi une architecture simplifiée tout en étant apte à supporter le niveau de vibration requis. Des logements 22 pour les inserts sont aménagés dans les panneaux latéraux à la base du caisson. D'autres panneaux latéraux 1f sont par exemple fixés aux panneaux latéraux à la base du caisson pour former des cloisons latérales du caisson 2. La structure primaire 100, selon l'exemple illustré, présente une forme globalement parallélépipédique rectangle, de section transversale sensiblement carrée, et comporte ici quatre cloisons latérales. Une cloison est formée d'un ou plusieurs panneaux, les cloisons étant fixées entre elles pour former le caisson. Cette forme parallélépipédique n'est cependant pas limitative et la structure primaire peut présenter une forme parallélépipédique de section quelconque, en losange par exemple, ou une forme prismatique de section triangulaire ou polygonale quelconque, avec à chaque fois un nombre adapté de panneaux assemblés à cet effet.

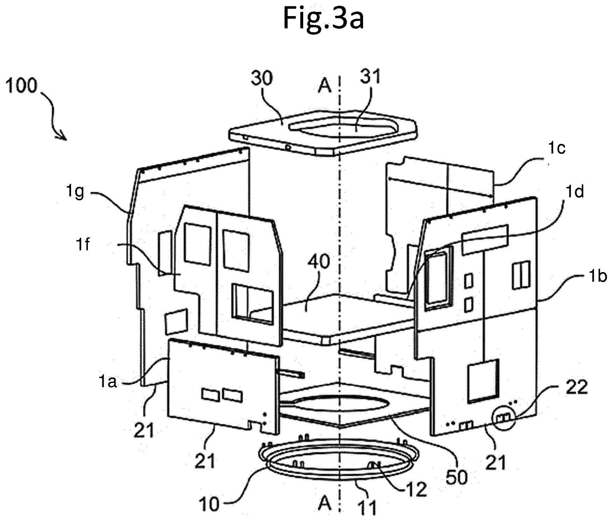

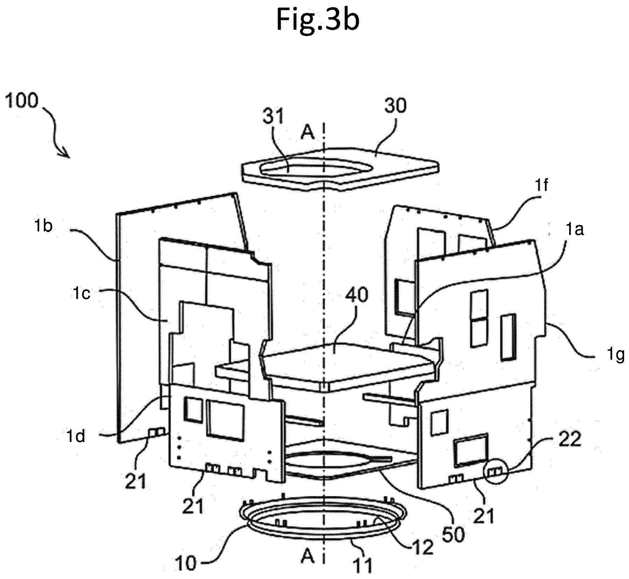

En référence aux figures 3a et 3b, la structure primaire 100 comporte par exemple l'anneau d'interface 10 reliés à plusieurs panneaux usinés formant les cloisons du caisson. Les cloisons du caisson comprennent par exemple des cloisons latérales, un plateau diaphragme 50 venant contre l'anneau d'interface, un panneau « terre » 30 disposé à l'opposé de l'anneau d'interface et un plateau transversal intérieur porte-instrument 40. Le plateau diaphragme 50 peut être maintenu contre l'anneau d'interface 10.

Deux cloisons latérales en vis-à-vis sont par exemple formées chacune de deux panneaux usinés 1f et 1a d'une part et 1c et 1d d'autre part, tandis que deux autres cloisons latérales en vis-à-vis sont par exemple formées chacune d'un seul panneau usiné 1b ou 1g. La cloison transversale à l'opposé de l'anneau d'interface, formant le panneau « terre » est par exemple formée d'un seul panneau 30 usiné. Le plateau diaphragme 50 transversale est par exemple formé d'un seul panneau usiné. Le plateau intérieur 40 porte instrument est par exemple formé d'un seul panneau usiné.

Le caisson est ainsi agencé de façon à fermer un volume intérieur de l'engin spatial destiné à recevoir l'instrument de mission ainsi que de nombreux éléments constitutif du satellite.

Le caisson est relié à l'anneau d'interface 10 et en particulier à sa face supérieure 12, sa face inférieure 11 étant reliée de façon temporaire au lanceur.

On désigne par les panneaux latéraux du caisson ou cloisons latérales du caisson les panneaux ou cloisons parallèles à un axe A géométrique de l'anneau d'interface 10.

Chaque panneau 1a, 1b ou 1f est monolithique et obtenu par usinage d'un matériau métallique, telle que l'aluminium. Une plaque métallique est par exemple usinée pour produire chaque panneau. Les panneaux latéraux 1a et 1b, disposés à la base du caisson, sont reliés à l'anneau d'interface 10 via des inserts amortissants. Ces inserts sont disposés dans des logements 22 de ces panneaux latéraux disposés à la base du caisson.

Avantageusement la structure primaire 100 est réalisée à partir de panneaux usinés reliés directement entre eux pour former le caisson. Les formes de ces panneaux sont optimisées, grâce à des outils informatiques tels que calculateurs selon la méthode des éléments finis, de sorte à obtenir un rapport masse à raideur compatible avec l'environnement spatial.

L'anneau d'interface 10, plus connu sous son sigle anglo-saxon SIR (*Satellite Interface Ring)*, est circulaire et définit un axe A s'étendant selon un axe longitudinal du satellite. Cet axe A géométrique de l'anneau passe par le centre de l'anneau et est perpendiculaire à un plan dans lequel s'étend l'anneau d'interface.

L'anneau d'interface 10 présente de façon connue une face inférieure 11 de diamètre standard, par laquelle il se raccorde temporairement à un autre anneau d'interface de même diamètre appartenant à un lanceur ou à un banc d'essai, et une face supérieure 12 sur laquelle est monté le caisson.

Les panneaux latéraux 1a et 1b, fixés à l'anneau d'interface 10, sont parallèles à l'axe géométrique A de l'anneau d'interface. Différents systèmes embarqués du satellite se fixent directement aux panneaux qui sont conformés selon un aménagement prédéterminé du satellite, de sorte à recevoir certains équipements et servitudes qui vont y être directement fixés. Les panneaux peuvent ainsi comprendre à cet effet des ouvertures, des nervures, des plaques formant interface ou des points de fixation.

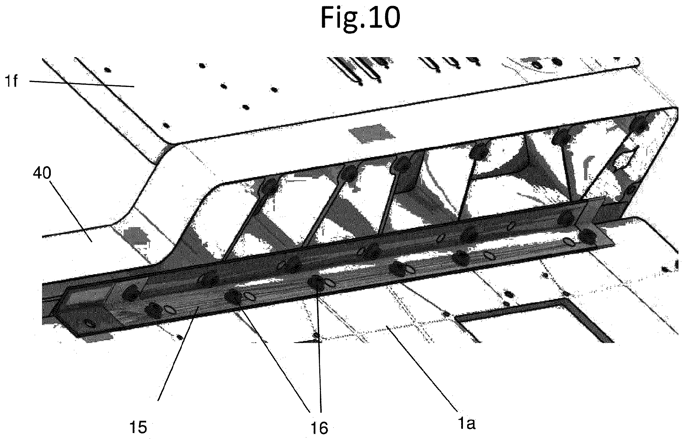

Le caisson comprend quatre cloisons latérales fixées deux à deux et perpendiculairement l'une à l'autre. Le caisson comprend sa cloison 30 à l'opposé de l'anneau, son plateau intérieur 40 et son diaphragme 50 disposés perpendiculairement à l'axe géométrique de l'anneau et perpendiculaire aux cloisons latérales. En outre, deux cloisons latérales en vis-à-vis l'une de l'autre sont toutes deux formées de deux panneaux latéraux 1a et 1f venant contre deux faces opposées du plateau porte-instrument, comme illustré à la figure 10.

D'une manière générale, chaque cloison du caisson peut être formée d'un ou plusieurs panneaux solidarisés entre eux par exemple par vissage directement dans les panneaux et/ou en utilisant des éléments mécaniques tels que des équerres ou des poutrelles. Cela permet, de faciliter l'accès au volume utile du satellite lors des phases d'intégration et de tests, notamment en assemblant partiellement le caisson pour intégrer les systèmes embarqués du satellite tout en apportant une isolation des parties sensibles aux vibrations.

La liaison entre l'anneau d'interface 10 et les panneaux latéraux à la base du caisson est de nature amortie et permet à la fois de fixer ces panneaux à l'anneau d'interface et de filtrer les vibrations entre eux. En effet, l'utilisation de panneaux usinés métalliques monolithiques fixés directement les uns aux autres, par exemple par vissage, nécessite de réduire les vibrations provenant de l'anneau d'interface générateur de vibrations. Les vibrations sont ainsi amorties, pour mieux isoler le caisson sur lequel des équipements sensibles peuvent être rigidement fixés.

Cet amortissement est réalisé au moyen d'inserts amortissants 60 placés quasi ponctuellement entre les bords 21 des panneaux latéraux à la base du caisson et la face supérieure 12 de l'anneau d'interface. Les inserts viennent par exemple dans des logements 22 prévus à cet effet dans ces panneaux latéraux.

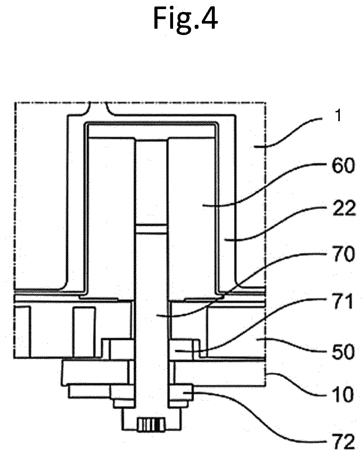

La figure 4 représente en vue de détail d'un point d'amortissement au niveau duquel un panneau latéral à la base du caisson est fixé à l'anneau d'interface 10 via un insert amortissant 60. L'insert amortissant 60 est placé dans un logement 22 du panneau 1. L'insert 60 présente par exemple une portion cylindrique de section circulaire s'insérant dans le logement 22 de section circulaire. L'insert est par exemple fixé au panneau par collage. L'insert comprend par exemple un trou fileté disposé selon son axe, auquel une vis de fixation 70 est reliée. La vis 70 traverse par exemple le diaphragme 50 serré entre l'insert et l'anneau d'interface. Le diaphragme fixé par exemple à l'anneau reste alors à distance du panneau latéral à la base du caisson. On prévoit par exemple l'adjonction de rondelles de chaque côté de l'anneau d'interface 10 : une rondelle 71 en plastique à renfort de verre tel qu'un époxy renforcé en fibres de verre entre l'anneau d'interface et le diaphragme 50 et une rondelle 72 en titane entre la tête de vis et l'anneau d'interface 10.

Bien entendu, l'invention ne se limite pas à ce type d'inserts amortissants.

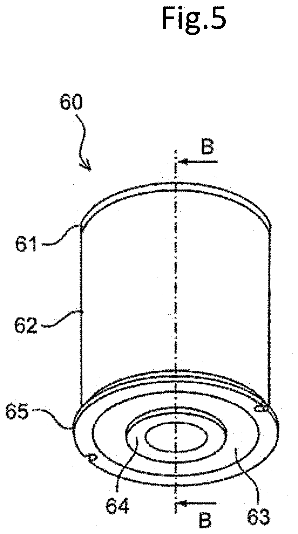

En référence à la figure 5, chaque insert amortissant 60 présente une forme extérieure cylindrique de révolution s'étendant longitudinalement. La face 61 avant de l'insert est circulaire et disposée dans le prolongement de sa surface latérale extérieure 62. La face 61 avant et la surface latérale extérieure 62 sont destinées à s'insérer dans le logement également de section circulaire. L'insert comprend une portion inférieure 65 élargie venant en appui contre une surface périphérique au logement dans le panneau. L'insert comprend une pièce externe 62 et une pièce interne 64 coaxiales, toutes deux tubulaires, et une couche d'élastomère 63 emplissant un espace entres elles en les reliant l'une à l'autre.

La face avant 61 de l'insert est plane et circulaire. La portion inférieure 65 de l'insert présente une forme annulaire plane. La face avant 61 de l'insert peut venir en appui contre une surface définissant le fond du logement dans le panneau.

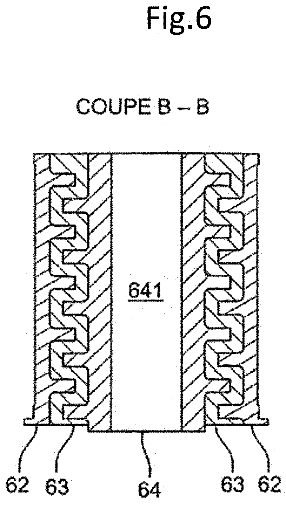

La portion inférieure 65 annulaire élargie venant en appui contre une surface périphérique au logement dans le panneau, présente une épaisseur déterminée de façon à laisser un espace libre entre le panneau et le diaphragme. Comme représenté à la figure 6, sa portion intérieure 64 vient ainsi en saillie par rapport à sa portion extérieure 62.

Le diaphragme est par exemple rigidement fixé à l'anneau d'interface. L'anneau d'interface 10 et le panneau diaphragme 50 sont générateurs de vibrations. Les panneaux latéraux à la base du caisson sont reliés à l'anneau d'interface via une liaison amortie élastique.

Des performances avantageuses de l'insert amortissant 60 peuvent être obtenues grâce à un agencement tel que représenté à la figure 6.

Comme représenté en coupe à la figure 6, les surfaces en vis-à-vis des pièces externe 62 et interne 64 présentent chacune un profil cranté et sont décalées longitudinalement de sorte à définir un espace ondulé donnant sa forme finale à la couche élastomère 63.

Cette conception permet aux inserts amortissants 60 de travailler aussi bien en traction lorsqu'ils sont sollicités longitudinalement et en cisaillement lorsqu'ils sont sollicités transversalement.

La mise en place de l'insert amortissant 60 est aisée. Un insert amortissant est par exemple enduit de colle et introduit dans le logement 22 aménagé dans un panneau latéral à la base du caisson. On peut ensuite fixer l'anneau d'interface aux panneaux latéraux à la base du caisson. Le diaphragme 50 est par exemple fixé par vissage contre l'anneau d'interface au moyen de vis et de rondelles. La pièce interne 64 comprend par exemple un trou fileté 641 axial recevant la vis 70, par exemple à pas standard M10. D'autres moyens de fixation avec la pièce interne 64 peuvent être envisagés tels que collage ou montage à ajustement serré.

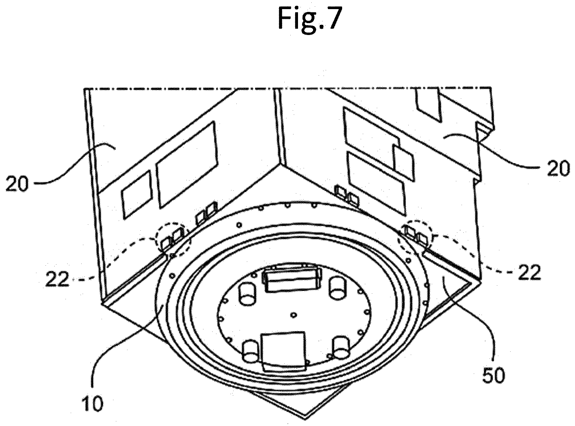

Selon l'exemple de réalisation illustré, chaque panneau latéral à la base du caisson comporte, sur son bord orienté vers l'anneau, quatre logements 22 pour recevoir des inserts amortissants 60, regroupés par paires. L'écart entre les deux paires peut être différent d'un panneau à l'autre comme représenté à la figure 7.

L'anneau d'interface 10 est par exemple fixé aux panneaux latéraux à la base du caisson, par un jeu de seize inserts amortissants 60.

Ainsi, la structure primaire 100 telle que décrite associe avantageusement des panneaux usinés avec une liaison amortie avec l'anneau d'interface 10 réalisée avec les inserts amortissants 60. Cette association permet de diminuer significativement les vibrations atteignant le caisson ainsi que les équipements et instruments fixés directement aux panneaux du caisson.

Par conséquent, les contraintes de tenue mécanique de la structure primaire peuvent être réduites, ce qui permet de réduire la masse des panneaux usinés formant le caisson.

Les déterminations de la masse de la structure primaire 100 et de sa répartition, notamment le réseau de nervures de chaque panneau, ont été réalisées via un outil informatique d'optimisation.

Des analyses modales, en simulation numérique, dans différents domaines fréquentiels, couvrant les chocs et les oscillations sinusoïdales, du satellite 200 comprenant la structure primaire 100 ont permis de valider le comportement du satellite au regard des spécifications requises.

Les résultats ont été validés pour des satellites de différentes tailles dont la masse varie par exemple entre 100 et 1000 kg. Dans l'exemple illustré, le satellite présente une envergure d'environ 1m × 1m × 1m50.

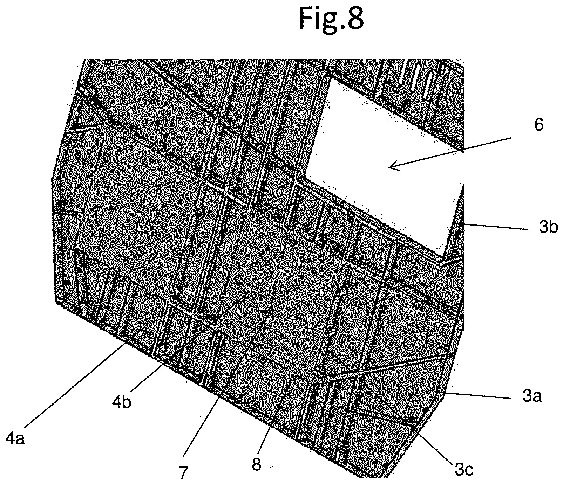

Comme représenté partiellement à la figure 8, un panneau peut comprendre une ouverture 6 destinée, par exemple au passage d'un instrument. Le panneau comprend également un réseau de nervure. Ce réseau de nervure comprend notamment une nervure périphérique 3b qui délimite l'ouverture 6.

Par ailleurs le réseau de nervures du panneau peut comprendre une nervure périphérique 3a qui délimite tout le contour du panneau.

Les nervures sont reliées par des plaques amincies, obtenues par exemple lors de l'usinage de la plaque métallique. Le panneau représenté à la figure 8 comprend en outre une interface 7 porte-instrument. Le réseau de nervures comprend par exemple alors une nervure périphérique 3c qui délimite cette interface porte instrument 7. L'interface porte instrument est fermée par une plaque amincie 4b dont l'épaisseur est déterminée en fonction d'un besoin d'évacuation thermique pour l'instrument. Les plaques amincies sont par exemple obtenues par enlèvement de matières entre les nervures, sur l'une ou l'autre des faces de la plaque métallique.

Les plaques amincies 4b aux interfaces porte instruments sont disposées à l'intérieur du caisson par rapport aux nervures tandis que les autres plaques amincies 4a sont par exemple disposées à l'extérieur du caisson par rapport aux nervures faisant alors saillie à l'intérieur du caisson. La vue de la figure 8 correspond à une vue de l'intérieur du caisson. Les nervures saillantes à l'intérieur du caisson permettent une fixation, par exemple par collage et/ou serrage, d'éléments internes à l'engin spatial.

Comme on peut le voir sur la figure 8, les nervures sont réalisées élargies en des positions déterminées correspondant à des points de fixation 8 percés et filetés.

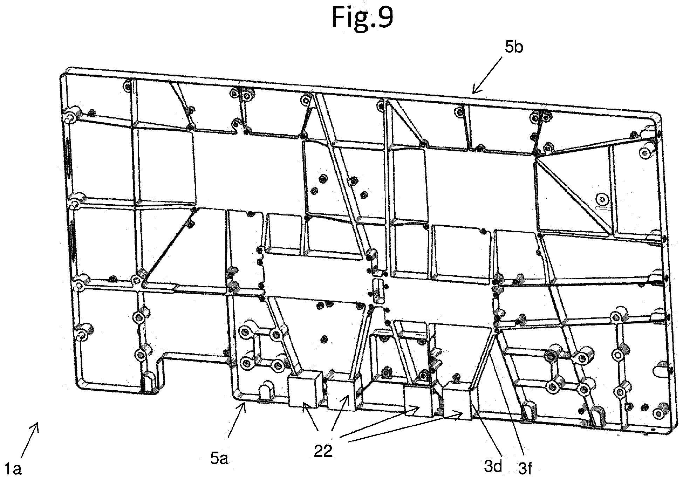

La figure 9 représente selon une vue en perspective un autre exemple de panneau. Ce panneau est obtenu par usinage d'un unique bloc métallique plein. Les plaques amincies entre les nervures sont obtenues par enlèvement de matière. On obtient ainsi dans chaque panneau un réseau de nervures entrecroisées et reliées entre elles par les plaques amincies.

Le réseau de nervures est agencé, dans chaque panneau, de façon à apporter une raideur déterminée ainsi qu'un transfert des efforts entre un bord proximal 5a et un bord distal 5b par rapport à l'anneau d'interface. On désigne par bord proximal le bord orienté vers l'anneau d'interface et on désigne par bord distal le bord orienté à l'opposé de l'anneau d'interface.

Comme représenté à la figure 9, chaque panneau latéral à la base du caisson comprend des logements ouverts 22 pour recevoir les inserts amortissants. Chaque logement est délimité par une nervure 3d, qui se prolonge par une nervure 3f s'étendant selon une direction longitudinale par rapport à l'axe A géométrique de l'anneau d'interface.

Le procédé de fabrication d'un satellite comprend ainsi une étape de définition d'un nombre déterminé de panneaux pour délimiter le caisson 2 relié à l'anneau d'interface. Les panneaux fixés entre eux permettent de fermer le volume intérieur du satellite.

A partir de ces dimensionnements des panneaux, on peut réaliser des étapes d'usinage de chaque panneau, à partir d'un unique bloc métallique plein dans lequel on enlève de la matière. Ce bloc est par exemple une plaque d'aluminium.

On réalise en suite un assemblage des panneaux usinés directement entre eux pour former le caisson, un assemblage des inserts amortissant avec l'anneau d'interface pour former la structure primaire du satellite, et un assemblage des éléments constitutifs de l'engin spatial directement avec les panneaux usinés. L'ordre d'assemblage de ces différents éléments constitutifs de l'engin spatial peut être avantageusement adapté selon les besoins.

Comme représenté à la figure 9, l'étape d'usinage fait apparaître un réseau de nervures entrecroisées et reliées entre elles par des plaques amincies. Ces nervures sont déterminées, par calcul, de façon à ce que le réseau de nervures apporte une raideur déterminée ainsi qu'un transfert des efforts dans chaque panneau, entre un bord proximal 5a et un bord distal 5b par rapport à l'anneau d'interface.

Les plaques amincies sont usinées par exemple dans le plan d'une des faces de la plaque métallique initiale, les nervures apparaissant alors saillant d'un côté ou de l'autre. L'usinage par fraisage est par exemple simplement réalisé sur l'une ou l'autre des faces de cette plaque.

Lorsque les nervures font saillie à l'intérieur du caisson, on peut alors y fixer des éléments intérieurs à l'engin spatial par pincement et/ou collage.

Comme représenté à la figure 10, l'assemblage peut être réalisé simplement par vissage directement dans les panneaux usinés. Une vis peut traverser un panneau pour se fixer dans un trou fileté d'un autre panneau. On peut également utiliser une équerre en métal traversée par des vis se fixant dans deux panneaux disposés à angle droit.

## Revendications

1. Structure primaire (100) pour engin spatial (200), comprenant un anneau d'interface (10) et un nombre déterminé de panneaux (1a, 1b, 1c) délimitant un caisson (2) agencé de façon à fermer un volume intérieur de l'engin spatial, le caisson (2) étant relié à l'anneau d'interface, les panneaux latéraux du caisson étant parallèles à un axe (A) géométrique de l'anneau d'interface, l'anneau d'interface étant destiné à être temporairement fixé à un système supportant l'engin spatial dans un lanceur, chaque panneau (1a, 1b, 1c) étant monolithique et obtenu par usinage d'un unique bloc métallique plein, les panneaux latéraux (1a, 1b) à la base du caisson étant reliés à l'anneau d'interface (10) via des inserts amortissant (60), chaque panneau comprenant un réseau de nervures (3a, 3b, 3c, 3d) entrecroisées et reliées entre elles par des plaques amincies (4a, 4b), le réseau de nervures étant agencé, dans chaque panneau, de façon à induire au moins une raideur déterminée ainsi qu'un transfert des efforts entre un bord proximal (5a) et un bord distal (5b) par rapport à l'anneau d'interface, les panneaux latéraux (1a, 1b) à la base du caisson comprennent des logements ouverts (22) pour recevoir les inserts amortissants, chacun de ces logements étant délimité par une nervure (3d), cette dernière nervure (3d) se prolongeant par au moins une nervure (3f) s'étendant selon une direction longitudinale par rapport à l'axe (A) géométrique de l'anneau d'interface.

2. Structure primaire (100) selon la revendication 1, où ledit réseau de nervures comprend une première nervure périphérique (3a) délimitant un contour de chaque panneau, certains des panneaux comprenant au moins une ouverture (6) et ledit réseau de nervures comprenant alors au moins une seconde nervure périphérique (3b) délimitant ladite ouverture, certains des panneaux comprenant au moins une interface (7) porte instrument et ledit réseau de nervures comprenant alors au moins une troisième nervure périphérique (3c) délimitant ladite interface porte instrument, cette interface étant fermée par une desdites plaques amincies (4b) présentant une épaisseur déterminée en fonction d'un besoin d'évacuation thermique pour l'instrument.

3. Structure primaire (100) selon la revendication 2, où les plaques amincies (4b) aux interfaces porte instruments sont disposées à l'intérieur du caisson par rapport aux nervures tandis que d'autres plaques amincies (4a) sont disposées à l'extérieur du caisson par rapport aux nervures qui sont alors disposées saillantes vers l'intérieur du caisson pour permettre d'y fixer des éléments internes à l'engin spatial.

4. Structure primaire (100) selon l'une des revendications 1 à 3, où les nervures sont réalisées élargies en des positions déterminées correspondant à des points de fixation (8) percés et filetés.

5. Structure primaire selon l'une quelconque des revendications précédentes, dans laquelle chaque insert amortissant (60) comporte :
- une pièce externe (62) fixée dans son logement (22) se présentant sous la forme d'un trou de section déterminée, la pièce externe (62) présentant une surface externe de même section que le trou et étant apte à s'insérer dans le logement,
- une pièce interne (64) apte à être fixée à l'anneau d'interface et
- une couche d'élastomère (63) entre la pièce externe et la pièce interne, les pièces externe (62) et interne (64) étant coaxiales et présentant des surfaces en vis-à-vis crantées et décalées longitudinalement l'une par rapport à l'autre, de sorte à définir un volume de forme ondulée recevant la couche d'élastomère (63).

6. Satellite artificiel (200) comprenant une structure primaire (100) selon l'une des revendications 1 à 5.

7. Procédé de fabrication d'un engin spatial (200) comprenant une étape de définition d'un nombre déterminé de panneaux (1a, 1b, 1c) délimitant un caisson (2) relié à un anneau d'interface (10) et agencé de façon à fermer un volume intérieur de l'engin spatial, comprenant :
- une étape d'usinage des panneaux chacun réalisé à partir d'un unique bloc métallique plein duquel est enlevé de la matière, de façon à faire apparaître un réseau de nervures (3a, 3b, 3c, 3d) entrecroisées et reliées entre elles par des plaques amincies (4a, 4b), le réseau de nervures étant agencé, dans chaque panneau, de façon à apporter une raideur déterminée ainsi qu'un transfert des efforts entre un bord proximal (5a) et un bord distal (5b) par rapport à l'anneau d'interface ;
- une étape d'assemblage comprenant un assemblage des panneaux usinés directement entre eux pour former le caisson, un assemblage d'inserts (60) amortissant avec l'anneau d'interface (10) pour former une structure primaire (100) de l'engin spatial, les inserts amortissant étant aménagés directement dans des panneaux usinés (1a, 1b) parallèles à un axe (A) géométrique de l'anneau d'interface et disposés à la base du caisson et un assemblage d'éléments constitutifs de l'engin spatial directement avec les panneaux usinés ;
des logements ouverts (22) pour recevoir les inserts amortissants sont usinés dans les panneaux (1a, 1b) parallèles à un axe (A) géométrique de l'anneau d'interface et disposés à la base du caisson, une nervure (3d) étant laissée en périphérie de chacun de ces logements et au moins une nervure (3f) étant laissée dans son prolongement, selon une direction longitudinale par rapport à l'axe (A) géométrique de l'anneau d'interface.

8. Procédé de fabrication selon la revendication 7, où au moins un des panneaux est usiné de façon à ce que son réseau de nervures comprenne au moins une nervure périphérique (3c) délimitant au moins une interface (7) porte instrument, cette interface étant fermée par une desdites plaques amincies (4b) présentant une épaisseur déterminée en fonction d'un besoin d'évacuation thermique pour l'instrument.

9. Procédé de fabrication selon la revendication 8, où ledit panneau est usiné de façon à ce que les plaques amincies (4b) aux interfaces (7) porte instruments soient disposées à l'intérieur du caisson par rapport aux nervures tandis que d'autres plaques amincies sont disposées à l'extérieur du caisson par rapport aux nervures qui sont alors disposées saillantes vers l'intérieur du caisson pour permettre d'y fixer des éléments internes à l'engin spatial.

10. Procédé de fabrication selon l'une des revendications 7 à 9, où les panneaux sont usinés en laissant une nervure (3a) délimitant la périphérie de chaque panneau.

11. Procédé de fabrication selon l'une des revendications 7 à 10, où des panneaux sont usinés en pratiquant au moins une ouverture (6) et en laissant au moins une nervure (3b) délimitant la périphérie de ladite ouverture.

12. Procédé de fabrication selon l'une des revendications 7 à 11, où les nervures sont réalisées élargies en des positions déterminées correspondant à des points de fixation (8) percés et filetés.

## Patentansprüche

1. Primärstruktur (100) für ein Raumfahrzeug (200), umfassend einen Schnittstellenring (10) und eine vorbestimmte Anzahl von Platten (1a, 1b, 1c), die eine Gehäuse (2) definieren, das so angeordnet ist, dass es ein Innenvolumen des Raumfahrzeugs verschließt, wobei das Gehäuse (2) mit dem Schnittstellenring verbunden ist, wobei die Seitenwände des Gehäuses parallel zu einer geometrischen Achse (A) des Schnittstellenrings sind, wobei der Schnittstellenring dazu bestimmt ist, vorübergehend an einem System befestigt zu werden, das das Raumfahrzeug in einer Trägerrakete trägt, wobei jede Platte (1a, 1b, 1c) monolithisch ist und durch Bearbeitung eines einzigen massiven Metallblocks erhalten wird, wobei die Seitenplatten (1a, 1b) an der Basis des Gehäuses mit dem Schnittstellenring (10) über stoßdämpfende Einsatzstücke (60) verbunden sind, wobei jede Platte ein Netzwerk aus Rippen (3a, 3b, 3c, 3d) umfasst, die sich kreuzen und miteinander durch verdünnte Platten (4a, 4b) verbunden sind, wobei das Netzwerk aus Rippen in jeder Platte so angeordnet ist, dass es zumindest eine bestimmte Steifigkeit sowie eine Kraftübertragung zwischen einer proximalen Kante (5a) und einer distalen Kante (5b) in Bezug auf den Schnittstellenring induziert, wobei die Seitenplatten (1a, 1b) an der Basis des Gehäuses offene Aussparungen (22) zum Aufnehmen der stoßdämpfenden Einsatzstücke umfassen, wobei jede dieser Aussparungen durch eine Rippe (3d) begrenzt ist, wobei diese letzte Rippe (3d) sich durch mindestens eine Rippe (3f) fortsetzt, die sich in eine Längsrichtung in Bezug auf die geometrische Achse (A) des Schnittstellenrings erstreckt.

2. Primärstruktur (100) nach Anspruch 1, wobei das Netzwerk aus Rippen eine erste Umfangsrippe (3a) umfasst, die eine Kontur jeder Platte begrenzt, wobei einige der Platten mindestens eine Öffnung (6) umfassen und das Netzwerk aus Rippennetzwerk somit mindestens eine zweite Umfangsrippe (3b) umfasst, die die Öffnung begrenzt, wobei einige der Platten mindestens eine Instrumentenhalteschnittstelle (7) umfassen und das Netzwerk aus Rippen somit mindestens eine dritte Umfangsrippe (3c) umfasst, die die Instrumentenhalteschnittstelle begrenzt, wobei diese Schnittstelle durch eine der verdünnten Platten (4b) verschlossen wird, die eine Dicke aufweist, die in Abhängigkeit von einer Wärmeableitungsanforderung für das Instrument bestimmt wird.

3. Primärstruktur (100) nach Anspruch 3, wobei die verdünnten Platten (4b) an den Instrumentenhalteschnittstellen im Inneren des Gehäuses in Bezug auf die Rippen angeordnet sind, während andere verdünnte Platten (4a) an der Außenseite des Gehäuses in Bezug auf die Rippen angeordnet sind, die so angeordnet sind, dass sie in das Innere des Gehäuses hineinragen, um dort das Befestigen von Innenelementen am Raumfahrzeug zu ermöglichen.

4. Primärstruktur (100) nach einem der Ansprüche 1 bis 3, wobei die Rippen so hergestellt sind, dass sie an bestimmten Positionen, die Bohr- und Gewindebefestigungspunkten (8) entsprechen, breiter sind.

5. Primärstruktur nach einem der vorhergehenden Ansprüche, wobei jedes stoßdämpfende Einsatzstück (60) Folgendes aufweist:
- Ein Außenteil (62), das in der Aussparung (22) befestigt ist und die Form eines Lochs mit vorbestimmtem Querschnitt annimmt, wobei das Außenteil (62) eine Außenfläche mit dem gleichen Querschnitt wie das Loch aufweist und dazu ausgelegt ist, in die Aussparung eingesetzt zu werden,
- ein Innenteil (64), das dazu ausgelegt ist, am Schnittstellenring befestigt zu sein, und
- eine Elastomerschicht (63) zwischen dem Außenteil und dem Innenteil, wobei das Außenteil (62) und das Innenteil (64) koaxial sind und einander zugewandte, gekerbte und in Längsrichtung zueinander versetzte Flächen aufweisen, so dass sie ein wellenförmiges Volumen definieren, das die Elastomerschicht (63) aufnimmt.

6. Künstlicher Satellit (200), umfassend eine Primärstruktur (100) nach einem der Ansprüche 1 bis 5.

7. Verfahren zum Herstellen eines Raumfahrzeugs (200), umfassend einen Schritt des Definierens einer vorbestimmten Anzahl von Platten (1a, 1b, 1c), die eine Gehäuse (2) begrenzen, das mit einem Schnittstellenring (10) verbunden und so angeordnet ist, dass es ein Innenvolumen des Raumfahrzeugs verschließt, umfassend:
- Einen Schritt des Bearbeitens der Platten, die jeweils aus einem einzigen massiven Metallblock hergestellt sind, von dem Material entfernt wird, damit ein Netzwerk aus Rippen (3a, 3b, 3c, 3d) entsteht, die sich kreuzen und miteinander durch verdünnte Platten (4a, 4b) verbunden sind, wobei das Netzwerk aus Rippen in jeder Platte so angeordnet ist, dass es eine bestimmte Steifigkeit sowie eine Kraftübertragung zwischen einer proximalen Kante (5a) und einer distalen Kante (5b) in Bezug auf den Schnittstellenring bietet;
- einen Schritt des Montierens, ein direktes Montieren der bearbeiteten Platten aneinander zum Bilden des Gehäuses, ein Montieren von stoßdämpfenden Einsätzen (60) mit dem Schnittstellenring (10) zum Bilden einer Primärstruktur (100) des Raumfahrzeugs, wobei die stoßdämpfenden Einsatzstücke direkt in den bearbeiteten Platten (1a, 1b) parallel zu einer geometrischen Achse (A) des Schnittstellenrings vorgesehen und an der Basis des Gehäuses angeordnet sind, und ein direktes Montieren einer Baugruppe von Komponentenelementen des Raumfahrzeugs mit den bearbeiteten Platten umfasst;
wobei die offenen Aussparungen (22) zum Aufnehmen der stoßdämpfenden Einsatzstücke in den Platten (1a, 1b) parallel zu einer geometrischen Achse (A) des Schnittstellenrings bearbeitet und an der Basis des Gehäuses angeordnet sind, wobei eine Rippe (3d) am Rand jeder dieser Aussparungen zurückbleibt und mindestens eine Rippe (3f) in ihrer Fortsetzung in einer Längsrichtung in Bezug auf die geometrische Achse (A) des Schnittstellenrings zurückbleibt.

8. Herstellungsverfahren nach Anspruch 7, wobei mindestens eine der Platten so bearbeitet wird, dass ihr Netzwerk aus Rippen mindestens eine Umfangsrippe (3c) umfasst, die mindestens eine Instrumentenhalteschnittstelle (7) begrenzt, wobei diese Schnittstelle durch eine der verdünnten Platten (4b) verschlossen wird, die eine Dicke aufweist, die in Abhängigkeit von einer Wärmeableitungsanforderung für das Instrument bestimmt wird.

9. Herstellungsverfahren nach Anspruch 8, wobei die Platte so bearbeitet wird, dass die verdünnten Platten (4b) an den Instrumentenhalteschnittstellen (7) im Inneren des Gehäuses in Bezug auf die Rippen angeordnet sind, während andere verdünnte Platten an der Außenseite des Gehäuses in Bezug auf die Rippen angeordnet sind, die so angeordnet sind, dass sie in das Innere des Gehäuses hineinragen, um dort das Befestigen von Innenelementen am Raumfahrzeug zu ermöglichen.

10. Herstellungsverfahren nach einem der Ansprüche 7 bis 9, wobei die Platten so bearbeitet werden, dass eine Rippe (3a) zurückbleibt, die den Rand jeder Platte begrenzt.

11. Herstellungsverfahren nach einem der Ansprüche 7 bis 10, wobei Platten so bearbeitet werden, dass mindestens eine Öffnung (6) gebildet wird und mindestens eine Rippe (3b) zurückbleibt, die den Rand der Öffnung begrenzt.

12. Herstellungsverfahren nach einem der Ansprüche 7 bis 11, wobei die Rippen so hergestellt sind, dass sie an bestimmten Positionen, die Bohr- und Gewindebefestigungspunkten (8) entsprechen, breiter sind.

## Claims

1. Primary structure (100) for a spacecraft (200) comprising an interface ring (10) and a predetermined number of panels (1a, 1b, 1c) defining a box (2) arranged so as to close an interior volume of the spacecraft, the box (2) being connected to the interface ring, the side panels of the box being parallel to a geometric axis (A) of the interface ring, the interface ring being intended to be temporarily fastened to a system supporting the spacecraft in a launcher, each panel (1a, 1b, 1c) being a one-piece panel and being obtained by machining a single solid metal block, the side panels (1a, 1b) at the base of the box being connected to the interface ring (10) via damping inserts (60), each panel comprising a network of intersecting ribs (3a, 3b, 3c, 3d) connected to one another by thinned plates (4a, 4b), the network of ribs being arranged, in each panel, so as to induce at least a determined stiffness as well as a transfer of forces between a proximal edge (5a) and a distal edge (5b) relative to the interface ring, the side panels (1a, 1b) at the base of the box comprise open recesses (22) for receiving the damping inserts, each of these recesses being defined by a rib (3d), the latter rib (3d) being continued by at least one rib (3f) extending in a longitudinal direction relative to the geometric axis (A) of the interface ring.

2. Primary structure (100) according to claim 1, wherein said network of ribs comprises a first peripheral rib (3a) defining a contour of each panel, some of the panels comprising at least one opening (6) and said network of ribs thus comprising at least a second peripheral rib (3b) defining said opening, some of the panels comprising at least one instrument-holding interface (7) and said network of ribs thus comprising at least a third peripheral rib (3c) defining said instrument-holding interface, this interface being closed by one of said thinned plates (4b) having a thickness that is determined as a function of a heat evacuation requirement for the instrument.

3. Primary structure (100) according to claim 2, wherein the thinned plates (4b) at the instrument-holding interfaces are disposed on the inside of the box relative to the ribs, whereas other thinned plates (4a) are disposed on the outside of the box relative to the ribs, which are thus disposed such that they project into the box to allow internal elements to be fastened to the spacecraft.

4. Primary structure (100) according to one of claims 1 to 3, wherein the ribs are made such that they are wider at determined positions corresponding to drilled and threaded fastening points (8).

5. Primary structure according to any one of the preceding claims, wherein each damping insert (60) includes:
- an external part (62) fastened in the recess (22) thereof taking on the form of a hole with a given cross-section, the external part (62) having an external surface with the same cross-section as the hole and being capable of being inserted into the recess,
- an internal part (64) capable of being fastened to the interface ring and
- an elastomer layer (63) between the external part and the internal part, the external (62) and internal (64) parts being coaxial and having surfaces that face one another and that are notched and longitudinally offset from one another, so as to define a wave-shaped volume receiving the elastomer layer (63).

6. Artificial satellite (200) comprising a primary structure (100) according to one of claims 1 to 5.

7. Method for manufacturing a spacecraft (200) comprising a step of defining a predetermined number of panels (1a, 1b, 1c) defining a box (2) connected to an interface ring (10) and arranged so as to close an interior volume of the spacecraft, comprising:
- a step of machining the panels, each made from a single solid metal block from which material is removed, so as to create a network of intersecting ribs (3a, 3b, 3c, 3d) connected to one another by thinned plates (4a, 4b), the network of ribs being arranged, in each panel, so as to induce at least a determined stiffness as well as a transfer of forces between a proximal edge (5a) and a distal edge (5b) relative to the interface ring;
- an assembly step comprising assembling the machined panels directly to one another to form the box, assembling damping inserts (60) with the interface ring (10) to form a primary structure (100) of the spacecraft, the damping inserts being arranged directly in machined panels (1a, 1b) parallel to a geometric axis (A) of the interface ring and disposed at the base of the box, and assembling component elements of the spacecraft directly with the machined panels;
open recesses (22) for receiving the damping inserts are machined in the panels (1a, 1b) parallel to a geometric axis (A) of the interface ring and disposed at the base of the box, a rib (3d) being left at the periphery of each of these recesses and at least one rib (3f) being left in the continuation thereof, in a longitudinal direction relative to the geometric axis (A) of the interface ring.

8. Manufacturing method according to claim 7, wherein at least one of the panels is machined such that the network of ribs thereof comprises at least one peripheral rib (3c) defining at least one instrument-holding interface (7), this interface being closed by one of said thinned plates (4b) having a thickness that is determined as a function of a heat evacuation requirement for the instrument.

9. Manufacturing method according to claim 8, wherein said panel is machined such that the thinned plates (4b) at the instrument-holding interfaces (7) are disposed on the inside of the box relative to the ribs, whereas other thinned plates are disposed on the outside of the box relative to the ribs, which are thus disposed such that they project towards the inside of the box to allow internal elements of the spacecraft to be fastened thereto.

10. Manufacturing method according to one of claims 7 to 9, wherein the panels are machined leaving a rib (3a) defining the periphery of each panel.

11. Manufacturing method according to one of claims 7 to 10, wherein panels are machined while making at least one opening (6) and leaving at least one rib (3b) defining the periphery of said opening.

12. Manufacturing method according to one of claims 7 to 11, wherein the ribs are made such that they are wider at determined positions corresponding to drilled and threaded fastening points (8).
